# EUROPEAN PATENT APPLICATION

(11) **EP 4 050 509 A1**
(43) Date of publication of application: **31.08.2022**
(21) Application number: 20893239.2
(22) Date of filing: 18.11.2020
(51) Int. Cl.: G06K 9/00

(54) **USER VERIFICATION METHOD AND APPARATUS, ELECTRONIC DEVICE AND COMPUTER-READABLE MEDIUM**

(30) Priority: 27.11.2019 CN 201911182645
(71) Applicant: ZTE Corporation, Shenzhen, Guangdong 518057 (CN)
(72) Inventor: PENG, Yihui, Shenzhen, Guangdong 518057 (CN)
(74) Representative: Zoli, Filippo
(86) International application number: PCT/CN2020/129797
(87) International publication number: WO 2021/104126

(57) **Abstract**

A user verification method and apparatus, an electronic device and a computer-readable medium are disclosed. The method includes, determining a terminal device in a verification area as a candidate terminal device and a user corresponding to the candidate terminal device as a candidate user according to communication information (S 101); acquiring facial information of a user in a recognition area within the verification area (S 102); performing a determination as to whether facial information matching the facial information acquired is present in pre-stored facial information of candidate users (S103); and in response to a presence of the facial information matching the facial information acquired, in the pre-stored facial information of candidate users, passing verification of the user (S104).

## Description

### CROSS-REFERENCE TO RELATED APPLICATION

The present application is filed based on the Chinese Patent Application No. 201911182645.0 filed on November 27, 2019, and claims priority of the Chinese Patent Application, the entire contents of which are incorporated herein by reference.

### TECHNICAL FIELD

Embodiments of the present disclosure relate to the field of identity verification, and in particular to a user verification method and apparatus, an electronic device, and a computer-readable medium.

### BACKGROUND

In daily life, user verification is usually required such as when a user enters a railway station, a subway station, etc.

Although reliable results can be obtained when user verification is performed through physical cards (such as subway passes or tickets, etc.), manpower and material resources are wasted, and the efficiency is low.

Performing user verification by comparing an identity card photo of the user with an acquired face of the user one by one often leads to low efficiency due to misoperation by the user.

Due to a large amount of data in a facial information database, the method of performing user verification by comparing the acquired face of the user with a face in the facial information database not only has a high requirement for computing equipment, but also is low in accuracy rate, often leading to an unreliable result.

### SUMMARY

Embodiments of the present disclosure provide a user verification method and apparatus, an electronic device, and a computer-readable medium.

In accordance with an aspect of the present disclosure, there is provided a user verification method, which includes, determining a terminal device in a verification area as a candidate terminal device and a user corresponding to the candidate terminal device as a candidate user according to communication information; acquiring facial information of a user in a recognition area within the verification area; performing a determination as to whether facial information matching the facial information acquired is present in pre-stored facial information of candidate users; and in response to a presence of the facial information matching the facial information acquired, in the pre-stored facial information of candidate users, passing a verification.

In accordance with another aspect of the present disclosure, there is provided a user verification apparatus, which includes, a detection module, configured to determine a terminal device in a verification area as a candidate terminal device and a user corresponding to the candidate terminal device as a candidate user according to communication information; an acquisition module, configured to acquire facial information of a user in a recognition area within the verification area; a determination module, configured to perform a determination as to whether facial information matching the facial information acquired, is present in pre-stored facial information of candidate users; and an execution module, configured to pass verification in response to a presence of facial information matching the facial information acquired.

In accordance with yet another aspect of the present disclosure, there is provided an electronic device, which includes, at least one processor; a memory storing at least one program which, when executed by the processor, causes the processor to carry out the user verification method as described above; and at least one I/O interface, connected between the processor and the memory, and configured to implement information interaction between the processor and the memory.

In accordance with yet another aspect of the present disclosure, there is provided a computer-readable medium storing a computer program which, when executed by a processor, causes the processor to carry out the user verification method as described above.

### BRIEF DESCRIPTION OF DRAWINGS

The accompanying drawings are intended to provide a further understanding of embodiments of the present disclosure and constitute a part of the description. The accompanying drawings are intended to illustrate the present disclosure in conjunction with the embodiments, and do not constitute a limitation to the present disclosure. The above and other features and advantages will become more apparent to those having ordinary skill in the art through the description of the detailed embodiments with reference to the accompanying drawings, in which:
FIG. 1 depicts a flowchart of a user verification method according to an embodiment of the present disclosure;
FIG. 2 depicts a flowchart of a user verification method according to another embodiment of the present disclosure;
FIG. 3 depicts a flowchart of part of the processes in the user verification method according to another embodiment of the present disclosure;
FIG. 4 depicts a flowchart of part of the processes in the user verification method according to another embodiment of the present disclosure;
FIG. 5 depicts a flowchart of part of the processes in the user verification method according to another embodiment of the present disclosure;
FIG. 6 depicts a block diagram of a user verification apparatus according to an embodiment of the present disclosure;
FIG. 7 depicts a block diagram of an electronic device according to an embodiment of the present disclosure; and
FIG. 8 depicts a block diagram of a computer-readable medium according to an embodiment of the present disclosure.

### DETAILED DESCRIPTION

In order to enable those having ordinary skill in the art to better understand the technical schemes of embodiments of the present disclosure, a user verification method and device, an electronic apparatus and a computer-readable medium according to the embodiments of the present disclosure will be described in detail below with reference to the accompanying drawings.

The embodiments of the present disclosure will be described in more details hereinafter with reference to the accompanying drawings, but the illustrated embodiments may be embodied in different forms, and should not be construed as limitations to the embodiments set forth in the present disclosure. On the contrary, these embodiments are provided to enable those having ordinary skill in the art to understand the scope of the present disclosure.

The embodiments of the present disclosure can be described with reference to plan views and/or cross-sectional views by means of an ideal schematic diagram of the present disclosure. Therefore, the exemplary illustration can be modified according to manufacturing technology and/or tolerances.

The embodiments and features in the embodiments in the present disclosure may be combined with each other without conflict.

The terms used in the present disclosure are only intended to describe specific embodiments, and are not intended to limit the present disclosure. As used in the present disclosure, the term "and/or" includes any and all combinations of one or more related enumerated items. If used in the present disclosure, singular forms "a" and "the" are also intended to include plural forms, unless otherwise indicated clearly in the context. If used in the present disclosure, the terms "include" and "to be made of' specify the presence of said features, integers, steps, operations, elements and/or components, but do not exclude the presence or addition of one or more other features, integers, steps, operations, elements, components and/or groups thereof.

Unless otherwise defined, all the terms (including technical and scientific terms) used in the present disclosure have the same meanings as commonly understood by those having ordinary skill in the art. It will also be understood that terms such as those defined in commonly used dictionaries should be interpreted as having meanings consistent with their meanings in the backgrounds of the related art and the present disclosure, and will not be interpreted as having idealized or over-formal meanings, unless so defined explicitly in the present disclosure.

The embodiments of the present disclosure are not limited to the embodiments shown in the accompanying drawings, but include modifications of the configuration formed based on a manufacturing process. Therefore, the areas illustrated in the accompanying drawings have schematic properties, and the shapes of the areas shown in the accompanying drawings illustrate the specific shapes of areas of elements, but are not intended to be limitative.

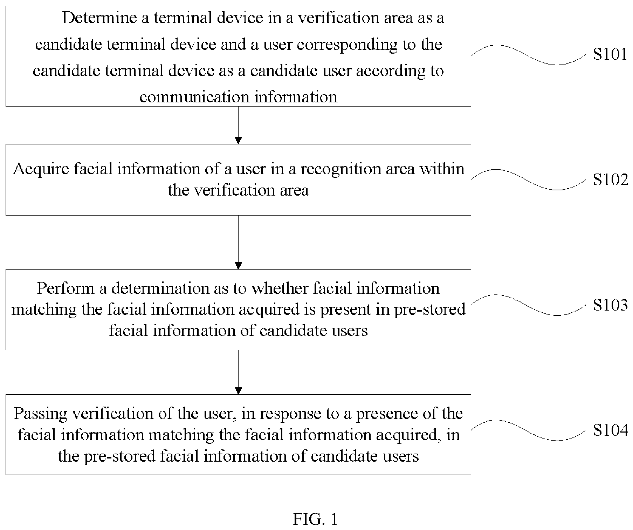

In accordance with an aspect of the present disclosure, referring to FIG. 1, an embodiment provides a user verification method, which includes S101 to S104.

At S101, a terminal device in a verification area is determined as a candidate terminal device and a user corresponding to the candidate terminal device is determined as a candidate user, according to communication information.

Most people will carry their terminal devices for communication (e.g., a mobile phone) most of the time. These terminal devices correspond to users (e.g., by registering terminal numbers using identity cards) and will access a communication network, so that the users can be located as long as the terminal devices are located.

For example, a Mobile Edge Computing (MEC) device may be deployed to receive communication information sent by a base station or the like (e.g., a cell where terminals are located, etc.), and determines a terminal (e.g., a mobile phone) located in a verification area as a candidate terminal and a user corresponding to the candidate terminal as a candidate user according to the received communication information.

The verification area is an area where users to be subjected to user verification are gathered. For example, a subway station into which people who want to take the subway have to enter first is a verification area. Users who have entered the subway station are candidate users, i.e., users who may have to undergo user verification. In other words, candidate users also include users who only enter the verification area but will not undergo user verification.

At S102, facial information of a user in a recognition area within the verification area is acquired.

Facial information of the user in the recognition area is acquired by a camera or the like. The facial information includes a face photo and facial feature code information. In some embodiments, the face photo is acquired and processed to obtain the facial feature code information. The recognition area is an area where identity verification is performed, which is located in the verification area.

For example, in a scenario of taking the subway, the verification area is a subway station, and the recognition area is an area around the entrance/exit turnstile. A camera mounted on the entrance/exit turnstile can acquire a face photo of the person passing through the turnstile, and the face photo is processed to obtain facial feature code information.

Apparently, if the recognition area coincides with the verification area, it is also feasible to verify all users in the verification area.

At S103, a determination is performed as to whether facial information matching the acquired facial information presents in pre-stored facial information of the candidate users.

After the facial information of the user in the recognition area is acquired, the MEC device determines whether facial information matching the facial information presents in the pre-stored facial information of the candidate users, i.e., users who are located in the verification area and from whom facial information can be acquired (because facial information of candidate users may have not been pre-stored, for example, users whose facial information has not been uploaded may have entered the verification area carrying their terminals).

For example, in the scenario of taking the subway, after the camera on the turnstile acquires the facial information, the facial information is compared with the facial information of the users who are currently in the subway station and from whom facial information can be acquired, so as to obtain facial information matching the facial information acquired by the camera on the turnstile.

At S 104, if the facial information matching the acquired facial information presents in pre-stored facial information of the candidate users, verification is passed.

If a result of the determination indicates that facial information matching the facial information of the user in the recognition area presents in the pre-stored facial information of the candidate users, user information in the recognition area is obtained by reading information of the candidate user, that is, verification is passed.

If the result of the determination indicates that facial information matching the facial information of the user in the recognition area does not exist, verification can be continued by artificial intervention or in other ways.

For example, in the scenario of taking the subway, if it is determined that there is facial information matching the facial information acquired by the camera on the turnstile, the user who is currently in front of the turnstile is considered as a matched user, and the turnstile is opened and subsequent operations are performed. If no matching facial information presents, the identity of the user in front of the turnstile can be checked through artificial verification by a staffer or having the user show an identity document, and subsequent operations can be performed.

According to an embodiment of the present disclosure, the scope of possible user identities is reduced by acquiring facial information of candidate users in the verification area, and the accuracy of verification is increased by user verification according to the comparison of the acquired facial information of the user with the pre-stored facial information of the users in the verification area.

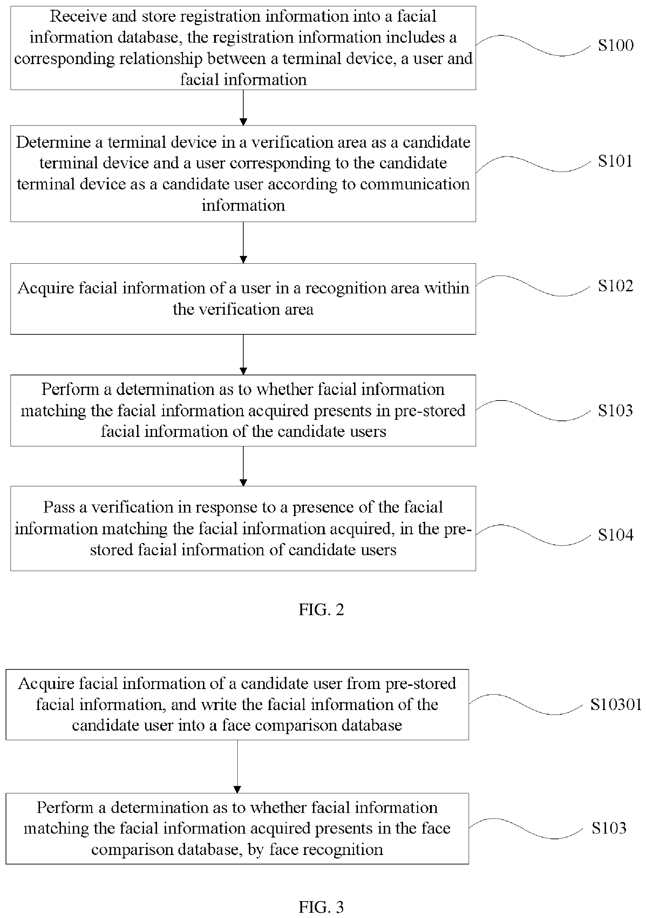

In some embodiments, referring to FIG. 2, prior to the determining terminals in a verification area as candidate terminals according to communication information (S101), the method further includes S100.

At S100, registration information is received and stored in a facial information database, where the registration information includes a corresponding relationship between a terminal, a user and facial information.

A passenger information platform collects facial information and corresponding terminal information and user information by means of a terminal application or a facial information registration machine mounted in a detection area, etc., and writes the facial information and the corresponding terminal information and user information into the facial information database. The terminal information may include a terminal number and the corresponding International Mobile Subscriber Identification Number (IMSI) information, and the user information may include identity card information and other card number information as needed.

That is, the user can upload his/her own face photo, terminal information and his/her own identity information to the passenger information platform through the terminal application or the physical facial information registration machine, etc. The IMSI number may be queried from a carrier's system. The passenger information platform generates facial feature codes according to the received face photo to obtain facial information, writes the obtained facial information and the corresponding terminal information and user information into the facial information database, and sends a "registration succeeded" notification message to the user.

For example, in the scenario of taking the subway, the user can upload his/her own facial information, identity information and the like through the mobile phone application or the facial information registration machine mounted in the subway station, and the passenger information platform receives and then stores the information uploaded by the user. It should be emphasized that other card number information needed represents card number information of a subway card to be used.

Users can conveniently and efficiently upload information by themselves, and the terminal application and the physical facial information registration machine are common means to collect information.

In some embodiments, referring to FIG. 3, the determination of a terminal device in a verification area as a candidate terminal device and a user corresponding to the candidate terminal device as a candidate user according to communication information (S101) includes, determining a terminal device entering the verification area from other areas as a candidate terminal device according to communication information.

After receiving the communication information, the MEC device can determine, whether a terminal is a candidate terminal according to a determination as to whether the terminal device enters the verification area from the other areas or not. Specifically, the terminal device entering the verification area from the other areas is determined as a candidate terminal device.

The communication information may be obtained through a base station with a signal range covering the verification area. In some embodiments, a cell covered by the base station is the verification area, while other cells adjacent to the cell serving as the verification area are other areas. Terminal devices (e.g., mobile phones) will report handover information to a carrier's core network due to cell handover when roaming, and at the same time, the terminal devices will periodically report registration information to the carrier's core network. For a 5G network, after receiving the handover information, the operator's core network forwards the handover information to the MEC device. For non-5G networks, by deploying a signaling monitoring system at the base station side, the captured handover information reported by the terminal devices is forwarded to the MEC device in real time. Thus, it is ensured that the terminal devices corresponding to communication messages obtained by the MEC device can only be terminal devices that enter the verification area from the other areas or from the verification area into the other areas, reducing computational load.

The MEC device extracts terminal device information (i.e., terminal device numbers and corresponding IMSIs) from the received communication information as well as data of the cell where the terminal devices are currently located, and compares the extracted cell data with the cell data of the verification area to judge whether the terminal devices are in the verification area. That is, if the extracted cell data is consistent with the cell data of the verification area, the terminal devices are terminal devices that enter the verification area from the other areas. Therefore, the terminal devices are candidate terminal devices, and corresponding users are candidate users.

For example, in the scenario of taking the subway, a base station covers a subway station, the area of the subway station corresponds to a cell, and other areas adjacent to the subway station correspond to other different cells. Thus, terminal devices (i.e., candidate terminal devices) which enter the subway station from the other areas can be found according to information of the cells where the terminal devices are located in communication information.

In some embodiments, referring to FIG. 3, prior to the determination as to whether facial information matching the acquired facial information presents in pre-stored facial information of the candidate users (S103), the method includes S10301.

At S 10301, facial information of a candidate user is obtained from pre-stored facial information, and is written into a face comparison database.

After determining the candidate terminal devices and the corresponding candidate users, the MEC device downloads the facial information of the candidate users from the pre-stored facial information database (in some embodiments, the facial information in the facial information database is all pre-stored facial information, i.e. facial information collected by the terminal device application or the facial information registration machine, etc.) according to the acquired terminal device information, and writes the facial information and the corresponding terminal device information and identity information into the face comparison database.

If no facial information of a candidate user is present in the pre-stored facial information database, the user can be prompted to upload his/her facial information by a notification sent to the user, or the like.

For example, in the scenario of taking the subway, facial information and corresponding user information and terminal device information of users who are currently in the subway station is downloaded from the pre-stored facial information database (e.g., facial information uploaded by the mobile phone application and the facial information registration machine mounted in the subway station) and is written into the face comparison database.

It should be emphasized that, in some embodiments, the face comparison database is updated in real time, that is, every time the MEC device determines that a user enters the verification area and determines the user as a candidate user, this process is executed to obtain and write facial information of the user into the face comparison database.

The real-time updating of the face comparison database ensures the effectiveness of the face comparison database and increases the accuracy of comparison.

In some embodiments, referring to FIG. 3, the determination as to whether facial information matching the acquired facial information presents in pre-stored facial information of the candidate users (S 103) includes, determining, by face recognition, whether facial information matching the acquired facial information presents in the face comparison database.

After the face photo is acquired and the facial information is obtained, the facial information is uploaded to the MEC device. Then, the MEC device only compares the facial information with all the facial information in the face comparison database (i.e., no comparison with the facial information database), and determines whether there is facial information matching the acquired facial information in the face comparison database. It is not intended to limit how the comparison is performed, and the comparison method with higher accuracy is better.

For example, in the scenario of taking the subway, facial information acquired by the camera mounted on the entrance/exit turnstile is compared with facial information in the face comparison database of the current subway station to obtain the identity of a user who is currently in front of the turnstile, and the turnstile is opened and closed.

The acquired facial information is only to be compared with the facial information of the users who are currently in the verification area rather than all the pre-stored facial information, thus greatly reducing the computational load of comparison.

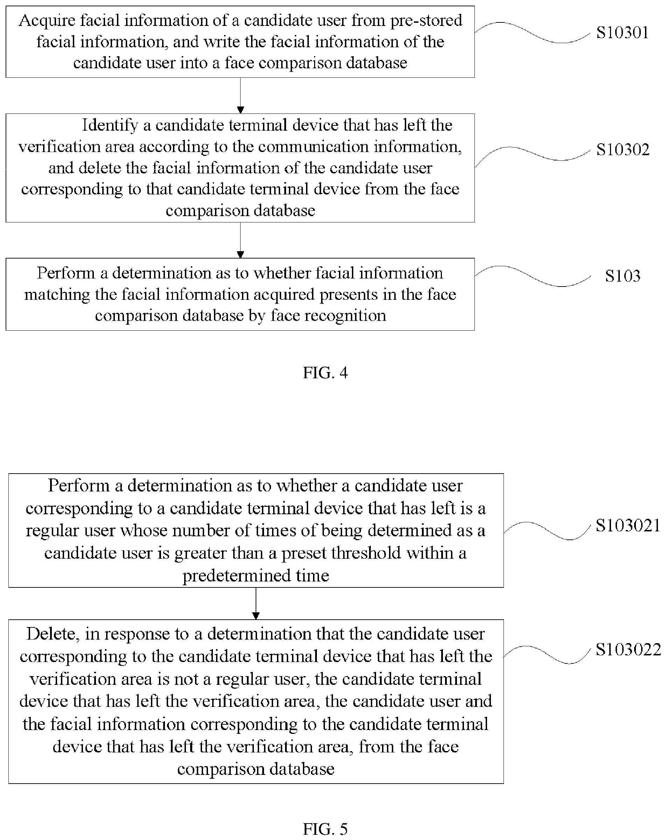

In some embodiments, referring to FIG. 4, prior to the determination as to whether facial information matching the acquired facial information presents in pre-stored facial information of the candidate users (S 103), the method further includes S 10302.

At S 10302, a candidate terminal device that has left the verification area is identified according to the communication information, and the facial information of the candidate user corresponding to that candidate terminal device is deleted from the face comparison database.

After receiving the communication information, the MEC device determines whether the terminal device has left the verification area according to a determination as to whether the terminal device enters the other areas from the verification area, and deletes the candidate terminal device that has left the verification area and the corresponding candidate user and facial information from the face comparison database.

The source of the communication information is the carrier's apparatus such as the base station, and only the communication messages including the terminal devices of the cell corresponding to the verification area among messages reported to the carrier's core network will be forwarded to the MEC device. That is, the terminal devices corresponding to the communication messages obtained by the MEC device can only be terminal devices that enter the verification area from the other areas or enter the other areas from the verification area.

Therefore, the MEC device should extract terminal device information (i.e., terminal device numbers and corresponding IMSIs) from the received communication information as well as data of the cell where the terminal devices are currently located, and compares the extracted cell data with the cell data of the verification area to determine whether the terminal devices are in the verification area. That is, if the extracted cell data is not consistent with the cell data of the verification area, the terminal devices are terminal devices that enter the other areas from the verification area, and the facial information of the candidate users corresponding to the terminal devices is to be deleted from the face comparison database.

In addition to adding the facial information corresponding to the candidate users into the face comparison database in real time, the facial information corresponding to the candidate users leaving the verification area is also deleted, ensuring that the facial information in the face comparison database is the facial information of the users who are currently in the verification area and that the amount of data in the face comparison database will not constantly increase with time.

It should be emphasized that the S10301 and S10302 are not necessarily performed one after another, but may be performed simultaneously, or S10301 may be performed prior to S 10302. In some embodiments, because the face comparison database is updated in real time, S 10301 is performed when a user is determined as a candidate user, and S 10302 is performed when a user leaves the verification area.

In some embodiments, referring to FIG. 5, the identification of a candidate terminal device that has left the verification area and deleting of the facial information of candidate users corresponding to the candidate terminal devices from the face comparison database (S 10302) includes S 103021 to S 103022.

At S 103021, a determination is performed as to whether a candidate user corresponding to a candidate terminal device is a regular user, where the regular user is a user whose number of times of becoming a candidate user within a predetermined time is greater than a preset threshold.

At S 103022, if the user is not a regular user, the candidate terminal device and the corresponding candidate user and facial information are deleted from the face comparison database.

After obtaining the candidate terminal devices to be deleted from the face comparison database, the MEC device determines whether the candidate users corresponding to the candidate terminal devices to be deleted are regular users. A regular user refers to a user whose facial information is frequently collected for user verification. Regular users may be periodically acquired through interaction with a big data system, and the like.

If the MEC device determines that the candidate users corresponding to the candidate terminal devices to be deleted are regular users, the candidate terminal devices and the corresponding candidate users and facial information will not be deleted from the face comparison database. If the MEC device determines that the candidate users corresponding to the candidate terminal devices to be deleted are not regular users, deletion is performed directly.

Because regular users may frequently appear in the verification area, that is, regular users are likely to enter the verification area again within a short time after leaving the verification area, there is no need to repeatedly perform downloading and deletion operations for regular users, which can reduce the computational load caused by repeated query, downloading, deletion and other operations.

For example, in the scenario of taking the subway, regular users are users who often enter and exit a subway station (e.g., a subway station near a user's home). If a user often travels by subway, the user is likely to be a regular user of the subway station. Thus, when the user leaves the subway station near his/her home, information of the user will not be deleted from the face comparison database.

Alternatively, S103 may also be as follows. The collected facial information of the user in the recognition area is directly compared with the facial information in the facial information database. When a number of pieces of facial information with similarity to some extent are obtained and the determination fails, a further determination as to whether a user who is in the verification area presents among the users corresponding to the similar facial information can be performed, and if so, verification is passed.

In some embodiments, the aforementioned user verification method is applied for entrance or exit verification of vehicles, the verification area is a parking area for vehicles, and the recognition area is an entrance or exit area for vehicles.

In some embodiments, the vehicle is a subway train, so the aforementioned user verification method may be applied for verifying users in front of a turnstile at the subway entrance or exit, so as to facilitate deduction of a fare from an account corresponding to a user (that is, the identity of the user is determined according to the face, and a fare is deducted from the account corresponding to the user). The corresponding verification area is a subway station, and the recognition area is the turnstile at the subway entrance or exit.

The entrance turnstile and exit turnstile of the subway station are generally associated with fare calculation and fare deduction operations, in which a determination as to whether the current turnstile is an entrance turnstile or an exit turnstile may be performed. In particular, as a user enters the subway station, after the identity of the user is verified, the user entering the subway station is recorded, and the entrance turnstile is opened; and as the user exits the subway station, after the identity of the user is verified, a fare is calculated and deducted according to the entrance and exit subway stations of the user, and the exit turnstile is then opened.

In particular, if there is a special group of people in a subway station who are less distinguishable by face recognition (that is, there is more than one piece of matching facial information in the face comparison database, such as the case of twins), the corresponding fare calculation may be performed by the subway station where the entrance turnstile and the exit turnstile are located, and records of entrance and exit in different subway stations may be synchronized by a distributed means such as a blockchain.

For example, A and B are a special group of people whose faces are less distinguishable by face recognition. If A and B enter the same subway station at close times, entrance may be recorded for both A and B without distinguishing A and B, and verification is passed to open the turnstile.

If A and B exit different subway stations, since A and B do not exit the same subway station, B will not appear among candidate users of the subway station from which A exits, that is, the subway station from which A exits can determine the identity of A. Thus, A can properly exit the subway station, the exit of A from the subway station can be properly recorded, and a fare can be properly charged. Likewise, A will not appear among candidate users of the subway station from which B exits, B can properly exit, the exit of B from the subway station can be properly recorded, and a fare can be properly charged.

If A and B exit the same subway station, the same fare should be charged from both A and B. A and B shall pass the verification first, and the fare is charged after it is determined that both A and B exit the same subway station. Otherwise, it cannot be determined whether A and B exit the same subway station.

For another example, A and B may enter different subway stations but exit the same subway station. In this case, A and B shall also pass the verification first, and when A and B both exit, i.e., once it is determined that A and B exit the same subway station, corresponding fares are charged according to the subway stations which A and B entered.

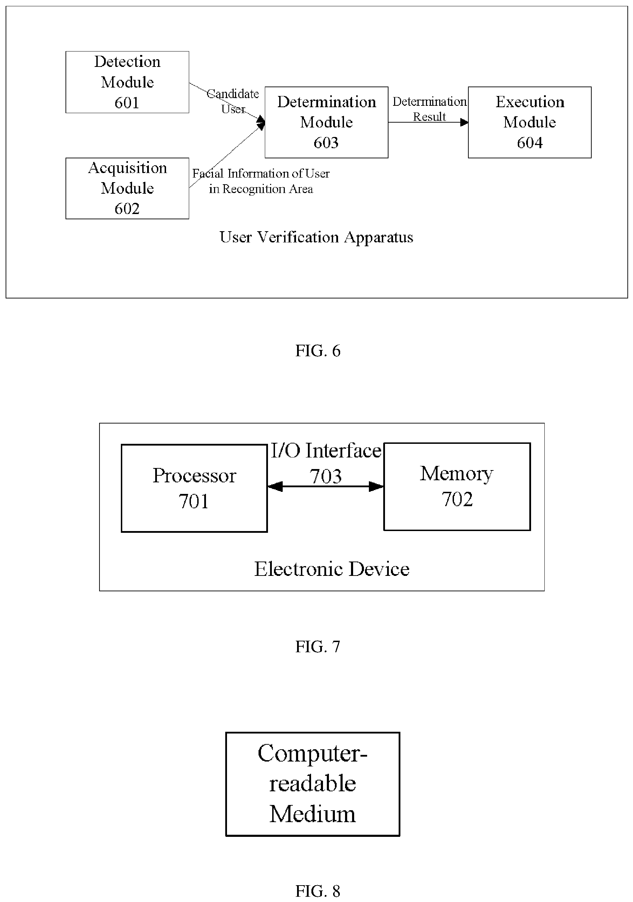

In accordance with another aspect of the present disclosure, referring to FIG. 6, an embodiment provides a user verification apparatus, which includes a detection module 601, an acquisition module 602, a determination module 603 and an execution module 604.

The detection module 601 is configured to determine a terminal device in a verification area as a candidate terminal device and a user corresponding to the candidate terminal device as a candidate user according to communication information.

The acquisition module 602 is configured to acquire facial information of a user in a recognition area located in the verification area.

The determination module 603 is configured to determine whether facial information matching the acquired facial information presents in pre-stored facial information of the candidate users.

The execution module 604 is configured to pass verification when there is facial information matching the acquired facial information.

In some embodiments, the apparatus is implemented based on blockchain technology, that is, the aforementioned apparatus may be implemented by adopting a distributed technique.

In accordance with yet another aspect of the present disclosure, referring to FIG. 7, an embodiment provides an electronic device, which includes:
one or more processors 701;
a memory 702 storing one or more programs which, when executed by the one or more processors 701, cause the one or more processors 701 to carry out any of the aforementioned user verification methods; and
one or more I/O interfaces 703, connected between the one or more processors 701 and the memory 702, and configured to implement information interaction between the one or more processors 701 and the memory 702.

The processor 701 is a device with data processing capability, which includes, but not limited to, a central processing unit (CPU) or the like. The memory is a device with data storage capability, which includes, but not limited to, random access memory (RAM, more specifically SDRAM, DDR and the like), a read-only memory (ROM), electrically erasable programmable read-only memory (EEPROM) and flash memory (Flash). The I/O interface 703 (read/write interface) is connected between the processor 701 and the memory 702, and is configured to carry out information interaction between the memory 702 and the processor 701, and the I/O interface 703 includes, but not limited to, data bus (Bus) and the like.

In accordance with yet another aspect of the present disclosure, referring to FIG. 8, an embodiment provides a computer-readable medium storing a computer program which, when executed by a processor, causes the processor to carry out any of the aforementioned user verification methods.

According to some embodiments of the present disclosure, the scope of possible user identities is reduced by acquiring facial information of candidate users in the verification area, and the accuracy of verification is increased by carrying out user verification according to the method of comparing the acquired facial information of the user with the pre-stored facial information of the users in the verification area.

It can be understood by those having ordinary skill in the art that all or some of the steps and the functional modules/units in the system and apparatus disclosed above may be implemented as software, firmware, hardware and their appropriate combinations.

In a hardware implementation, the division of the functional modules/units mentioned in the above description does not necessarily correspond to the division of physical components. For example, a physical component may have multiple functions, or a function or step may be executed by a plurality of physical components in cooperation.

Some or all of the physical components may be implemented as software executed by a processor (such as a central processing unit (CPU), a digital signal processor or a microprocessor), hardware or an integrated circuit (such as an application-specific integrated circuit). Such software may be distributed on computer-readable media, which may include computer storage media (or non-transitory media) and communication media (or transitory media). As well-known to those having ordinary skill in the art, the term "computer storage media" include volatile and nonvolatile, removable and non-removable media implemented in any method or technology for storing information (such as computer-readable instructions, data structures, program modules or other data). The computer storage medium includes, but not limited to, random access memory (RAM, more specifically SDRAM, DDR and the like), read-only memory (ROM), electrically erasable programmable read-only memory (EEPROM), FLASH memory or other disk storages; compact disc (CD-ROM), digital versatile disc (DVD) or other optical disc storages; cassette, magnetic tape, magnetic disk storage or other magnetic storages; and any other media that can be used to store desired information and can be accessed by computers. Furthermore, it is well-known to those having ordinary skill in the art that communication media typically contain computer-readable instructions, data structures, program modules or other data in a modulated data signal such as carriers or other transmission mechanisms, and may include any information delivery media.

The present disclosure has disclosed some embodiments, and although specific terms are used, these terms are only used and should only be interpreted in a general illustrative sense, and are not used for the purpose of limitation. In some examples, it is apparent to those having ordinary skill in the art that the features, characteristics and/or elements described in conjunction with the specific embodiments may be used alone or in combination with those described in conjunction with other embodiments, unless otherwise stated explicitly. Therefore, it will be understood by those having ordinary skill in the art that various changes in form and details can be made without departing from the scope of the present disclosure set forth by the appended claims.

## Claims

1. A user verification method, comprising,
determining a terminal device in a verification area as a candidate terminal device and a user corresponding to the candidate terminal device as a candidate user according to communication information;
acquiring facial information of a user in a recognition area within the verification area;
performing a determination as to whether facial information matching the facial information acquired is present in pre-stored facial information of candidate users; and
in response to a presence of the facial information matching the facial information acquired, in the pre-stored facial information of candidate users, passing verification of the user.

2. The method of claim 1, wherein prior to the determining of a terminal device in a verification area as a candidate terminal device according to communication information, the method further comprises,
receiving registration information comprising a corresponding relationship between a terminal device, a user and facial information, and storing the registration information into a facial information database.

3. The method of claim 1, wherein the determining of a terminal device in a verification area as a candidate terminal device according to communication information comprises,
determining a terminal device entering the verification area from areas other than the verification area as a candidate terminal device according to communication information.

4. The method of claim 1, wherein,
prior to the performing of a determination as to whether facial information matching the facial information acquired is present in pre-stored facial information of candidate users, the method comprises, acquiring facial information of the candidate user from pre-stored facial information, and writing the facial information of the candidate user into a face comparison database; and
the performing of a determination as to whether facial information matching the facial information acquired is present in pre-stored facial information of candidate users comprises, performing a determination as to whether facial information matching the facial information acquired is present in the face comparison database by face recognition.

5. The method of claim 4, prior to the performing of a determination as to whether facial information matching the facial information acquired is present in pre-stored facial information of candidate users, the method further comprises,
identifying a candidate terminal device that has left the verification area according to the communication information, and deleting the facial information of a candidate user corresponding to the candidate terminal device that has left the verification area, from the face comparison database.

6. The method of claim 5, wherein the identifying of a candidate terminal device that has left the verification area according to the communication information and the deleting of the facial information of candidate users corresponding to the candidate terminal device that has left the verification area, from the face comparison database comprises,
performing a further determination as to whether the candidate user corresponding to the candidate terminal device that has left the verification area is a regular user whose number of times of being determined as a candidate user is greater than a preset threshold within a predetermined time; and
in response to a determination that the candidate user corresponding to the candidate terminal device that has left the verification area is not a regular user, deleting the candidate terminal device that has left the verification area, the candidate user and the facial information corresponding to the candidate terminal device that has left the verification area, from the face comparison database.

7. The method of claim 1, wherein,
the method is applied for verifying an entrance and exit of a vehicle;
the verification area is a parking area for the vehicle; and
the recognition area is an entrance or exit area for the vehicle.

8. The method of claim 7, wherein,
the vehicle is a subway train;
the verification area is a subway station area; and
the recognition area is a subway entrance turnstile area, or a subway exit turnstile area.

9. A user verification apparatus, comprising,
a detection module, configured to determine a terminal device in a verification area as a candidate terminal device and a user corresponding to the candidate terminal device as a candidate user according to communication information;
an acquisition module, configured to acquire facial information of a user in a recognition area within the verification area;
a determination module, configured to perform a determination as to whether facial information matching the facial information acquired, is present in pre-stored facial information of candidate users; and
an execution module, configured to pass verification of the user in response to a presence of facial information matching the facial information acquired.

10. The apparatus according to claim 9, wherein,
the apparatus is implemented based on blockchain technology.

11. An electronic device, comprising,
at least one processor;
a memory storing at least one program which, when executed by the processor, causes the processor to carry out the user verification method of any one of claims 1 to 8; and
at least one I/O interface, connected between the processor and the memory, and configured to implement information interaction between the processor and the memory.

12. A computer-readable storage medium, storing a computer program which, when executed by a processor, causes the processor to carry out the user verification method of any one of claims 1 to 8.
